(19) **Europäisches Patentamt**
**European Patent Office**
**Office européen des brevets**

(11) **EP 4 396 024 B1**

(12) **EUROPEAN PATENT SPECIFICATION**

(45) Date of publication and mention
of the grant of the patent:
**09.07.2025 Bulletin 2025/28**

(21) Application number: **22772528.0**

(22) Date of filing: **02.09.2022**

(51) International Patent Classification (IPC):
*B60L 53/12* (2019.01)      *B60L 53/14* (2019.01)
*B60L 53/35* (2019.01)

(52) Cooperative Patent Classification (CPC):
**B60L 53/12; B60L 53/14; B60L 53/35;** Y02T 10/70;
Y02T 10/7072; Y02T 90/14

(86) International application number:
**PCT/EP2022/074538**

(87) International publication number:
**WO 2023/031442 (09.03.2023 Gazette 2023/10)**

(54) **MAGNETIC FIELD BASED GUIDING SYSTEM AND METHOD FOR GUIDING**

MAGNETFELDBASIERTES FÜHRUNGSSYSTEM UND VERFAHREN ZUR FÜHRUNG

SYSTEME DE GUIDAGE A BASE DE CHAMP MAGNETIQUE ET PROCEDE DE GUIDAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **03.09.2021 NL 2029123**

(43) Date of publication of application:
**10.07.2024 Bulletin 2024/28**

(73) Proprietor: **Prodrive Technologies Innovation
Services B.V.**
**5692 EM Son en Breugel (NL)**

(72) Inventors:
• **HAUSMANS, Joost**
**5692 EM Son en Breugel (NL)**
• **VRIJSEN, Nilles**
**5692 EM Son en Breugel (NL)**

(74) Representative: **IP Maison**
**Sportweg 6**
**2751 ER Moerkapelle (NL)**

(56) References cited:
**WO-A1-2018/077514      US-A1- 2017 259 679
US-A1- 2018 056 800**

• **ZOU MING XUAN ET AL: "A new coil structure for
positioning estimate of wireless power
transmission", vol. 30, no. 12, 23 December 2020
(2020-12-23), XP055928918, ISSN: 1096-4290,
Retrieved from the Internet <URL:https://
onlinelibrary.wiley.com/doi/full-xml/10.1002/
mmce.22453> [retrieved on 20220620], DOI:
10.1002/mmce.22453**
• **HUANG XINGMAN ET AL: "An Electromagnetic
Tracking Method Based on Phase Difference
Detection", IEEE TRANSACTIONS ON
MAGNETICS, IEEE, USA, vol. 55, no. 9,
September 2019 (2019-09-01), pages 1 - 8,
XP011740638, ISSN: 0018-9464, [retrieved on
20190816], DOI: 10.1109/TMAG.2019.2915264**

Note: Within nine months of the publication of the mention of the grant of the European patent in the European Patent
Bulletin, any person may give notice to the European Patent Office of opposition to that patent, in accordance with the
Implementing Regulations. Notice of opposition shall not be deemed to have been filed until the opposition fee has been
paid. (Art. 99(1) European Patent Convention).

## Description

## Technical field

The present invention relates to guiding systems and methods based on sensing electromagnetic fields.

## Background art

Guiding is important for any type of next generation automation. An example of such automation is presented by automatically charging an electric vehicle (EV) without any manual interaction. During such an operation a first energy transfer unit (e.g. comprising a plug) of an EV is automatically aligned and/or mated with a second energy transfer unit (e.g. comprising a socket) of a charging station. Therefore, it is required to obtain information about the relative position between the first and the second energy transfer unit. This is just an example of an application and there are plentiful useful applications in other areas, such as in industrial automation (e.g. pick and place machines, automatic guided vehicles such as drones, ships, industrial vehicles).

Various guiding systems are known in the art. Such systems may be based on sound (e.g. ultrasound) or electromagnetic fields and typically use triangulation or trilateration to determine the relative position of a first unit with respect to a second unit.

Guiding systems based on ultrasound and light (e.g. camera-based) have the disadvantage that they require a line of sight , which is not always possible. Furthermore, the transmitters and receivers of these guiding systems can become obstructed by for example water, ice, dust and dirt, which make them less robust in uncontrolled environments (e.g. outdoors).

Guiding systems based on magnetic fields do not have these disadvantages associated with sound and light. US 2017/0259679 and US 2018/0056800 disclose methods and apparatuses for positioning a vehicle in which a plurality of receive coils are configured to generate a respective voltage signal from a wireless magnetic field generated by a field generator. One disadvantage of guiding systems based on magnetic fields known in the art, is that electrically conducting and/or magnetic permeable materials in the surrounding may distort the magnetic field and thereby negatively impact the performance of the guiding system. Another disadvantage of such guiding systems is that they are dependent on environmental influences and consequently these are difficult to standardize to make them interoperable between different system implementations.

WO 2018/077514 discloses a detection system for detecting whether an object, such as a ball in a sports game, has passed a specified target plane. The object comprises a plurality of coils configured to emit a second magnetic field in response to a first magnetic field emitted by a source antenna. A signal related to the second magnetic field is captured by a plurality of loop antennas. The magnetic fields are constructed in a way that the electromagnetic interference by disturbing objects is shifted to the in-phase component of the received signal, while the quadrature component is less sensitive to the interference. A detection on whether the object crossed the target plane is based exclusively on the quadrature component, while discarding the in-phase component of the received signal. One drawback of the method of WO 2018/077514 is that a source antenna is used that completely encloses the target plane, making this method hardly applicable to guiding systems for vehicle charging. Furthermore, the detection method of WO 2018/077514 requires a large signal processing effort and complex antenna configurations to detect whether the object crosses the target plane, and both hardware and software implementations are too expensive for high volume production. Additionally, while this detection method may be suitable in applications with moderate interference by disturbances, it may not be that robust in applications with large amounts of metals in the environment, such as the underbody of a vehicle.

## Summary

It is an object of the invention to provide a guiding system that solves at least one, preferably all disadvantages associated with solutions according to the prior art. In particular, it is an object of the present invention to provide a robust guiding system that is less sensitive for distortions or disturbances by environmental factors. It is an object of the present invention to provide a guiding system based on electromagnetic field sensing that is less complex and hence more economical compared to prior art systems.

According to a first aspect of the present disclosure there is provided a guiding system as set out in the appended claims. A guiding system as described herein comprises a first circuit comprising a first coil coupled to a driving circuit configured to drive the first coil for emitting a first electromagnetic field, a second circuit comprising a second coil coupled to a detection circuit and configured to interact with a second electromagnetic field, and a third circuit comprising a third coil configured for generating the second electromagnetic field based on an interaction between the third circuit (third coil) and the first electromagnetic field.

Specifically, the interaction between the third coil and the first electromagnetic field is an electromagnetic interaction, in which the first electromagnetic field is detected by the third coil, e.g. the first electromagnetic field induces a signal (e.g., a voltage) in the third coil. The second electromagnetic field is generated by the third circuit based on (a magnitude of) the signal induced by the first electromagnetic field in the third coil. The second electromagnetic field is advantageously proportional to the detected first electromagnetic field in the third coil, e.g. proportional to the (magnitude of) the signal (e.g.,

voltage) induced in the third coil by the first electromagnetic field. The third circuit can be configured to amplify the detected first electromagnetic field in the third coil to generate the second electromagnetic field, e.g. by resonance or by an additional amplification circuit comprised in the third circuit. Such an amplification can be linear or non-linear. Hence the second electromagnetic field can be linearly or nonlinearly proportional to the detected first electromagnetic field in the third coil.

The first coil has a first winding axis, the second coil has a second winding axis essentially orthogonal to the first winding axis and the third coil has a third winding axis having a directional component parallel to one of the first winding axis and the second winding axis. The directional component of the third winding axis is hence orthogonal to the other one of the first winding axis and the second winding axis. The guiding system further comprises a processing unit connected to the detection circuit and configured to detect a polarity of the second electromagnetic field received by the second coil. The processing unit is configured to determine a direction (of displacement, or of approach) between the third coil and a reference plane based on the detected polarity of the second electromagnetic field.

The reference plane is defined as a plane for which the polarity changes sign across the reference plane. A number of different configurations are possible.

In a first possible configuration, the third winding axis has a directional component orthogonal to the first winding axis. In this case, the reference plane is defined by:

(i) a plane orthogonal to the first winding axis, or (ii) a plane orthogonal to the directional component. In both cases, the reference plane is positioned such that it intersects a location where the first electromagnetic field has a direction oriented orthogonal to the third winding axis, i.e. the field direction is parallel to a cross sectional plane of the third coil (orthogonal to the third winding axis) such that the first electromagnetic field does not induce an interaction with the third coil, hence not generating the second electromagnetic field at the reference plane.

In a second possible configuration, the third winding axis has a directional component orthogonal to the second winding axis. In this case, the reference plane is defined by: (i) a plane orthogonal to the second winding axis, or (ii) a plane orthogonal to the directional component. In both cases, the reference plane is positioned such that it intersects a location where the second electromagnetic field has a direction oriented orthogonal to the second winding axis, i.e. the field direction is parallel to a cross sectional plane of the second coil (orthogonal to the second winding axis) such that the second electromagnetic field does not induce an interaction with the second coil, hence the second electromagnetic field is not sensed by the second coil at the position of the reference plane.

Such a guiding system based on detecting the polarity of the second electromagnetic field allows for an easy and quick way of determining the displacement direction, in particular for alignment procedures, e.g. where plug and socket of a battery charging system are automatically aligned. This is achieved because the polarity of the second electromagnetic field changes sign when the third coil crosses the reference plane (or vice versa). This allows for an easy determination of the direction (i.e. sense) of motion leading to improved alignment, in particular because of a high gradient of the field strength in the vicinity of the reference plane allowing for reliable detection of the sign change of the polarity. Furthermore, this change of sign is affected to a lesser extent by environmental factors (e.g. temperature, metals), especially when the coils approach the aligned position in this plane.

Another advantage is that the guidance (displacement) direction is obtained by the sign information of the second electromagnetic field, which is highly independent of external environmental factors. Additionally, the final position accuracy is significantly increased since the location of the change of sign when the third coil approaches the reference plane has a high signal to noise ratio.

The driving circuit may be configured to generate a first electromagnetic field at any suitable frequency, but preferably is configured to transmit a low-frequency magnetic field (e.g. between 20 kHz and 150 kHz).

Advantageously, the third circuit is configured for adapting, e.g. modulating, an impedance of the third coil, in particular between a first state in which the third circuit generates a second electromagnetic field of a first strength and a second state in which the third circuit generates a second electromagnetic field of a second strength weaker than the first strength, or no second electromagnetic field at all. This enables obtaining information regarding environmental factors that may influence the electromagnetic field. For instance, the processing unit may further be configured to determine the displacement direction based on information obtained in the first and the second state. Additionally, modulating the impedance of the third coil advantageously enables obtaining information on the guiding (displacement) direction using the polarity information of the magnetic field.

Modulating an impedance of a coil allows to obtain an unambiguous guiding direction with minimal dependency on environmental influences. This is advantageous for automotive applications with the intention to achieve interoperability of different systems for a large range of different vehicle environments with a minimal set of requirements, or a minimal set of information being communicated between the first and second unit.

Advantageously, the third coil comprises a switch configured to interrupt a current path of the third coil, and the third circuit is configured to operate the switch to modulate the impedance, e.g. to toggle between the first state and the second state. This provides a simple and convenient way of eliminating the interaction of the third coil with the first electromagnetic field. This switch to adapt (modulate) the impedance of the third coil can be placed in series or in parallel with the third coil and/or the (resonant) circuit connected to the third coil.

Preferably, the processing unit is further configured for detecting a magnetic field strength, in particular a strength of a magnetic field detected by the second coil. The change of the field strength during movement of the second or third coil may be used to determine the displacement direction. Additionally or alternatively, the field strength may be used for determining additional information relating to the distance between the second and the third coil and/or between the first coil and the third coil, such as a relative position of the second coil with respect to the third coil. The field strength information may aid in discriminating between polarity changes (zero crossings of the detected signal) to determine the polarity change related to the reference plane.

Advantageously, the first coil and the second coil are arranged at fixed relative positions. In a beneficial embodiment, the first coil defines a first center, and wherein the second coil defines a second center, and the first center and the second center coincide. Such an arrangement is most compact. Also, it facilitates providing a single component comprising both the first and second coil, simplifying alignment of the first and second coil.

The first circuit and the second circuit may be integrated in a first unit and the third circuit may be integrated in a second unit. The guiding system may further comprise communicating means configured for communicating between the first unit and the second unit state information corresponding to the impedance of the third coil, such as the switching sequence, period, or signal amplitude. This enables the system to determine the sign of the second electromagnetic field with negligible influence of the environment on the detected signal.

In an exemplary embodiment according to the invention the second unit comprises a resonant circuit comprising the third coil, preferably wherein the first unit comprises at least one further resonant circuit comprising a corresponding coil. This offers the benefit of maximization of the transmitted magnetic field of each of both coils, resulting in a larger guiding range and a higher signal-to-noise ratio.

Preferably, the system further comprises at least one further coil, e.g. a fourth coil having a fourth winding axis essentially orthogonal to the (directional component of the) third winding axis. Preferably, the fourth winding axis is orthogonal to the second winding axis and oblique and possibly orthogonal to the first winding axis. Preferably, the (directional component of the) third winding axis is parallel to the second winding axis. The coil centres of the first and fourth coils can coincide or be offset. A driving circuit is configured for driving the fourth coil for generating a third electromagnetic field. The third coil is configured for generating a fourth electromagnetic field based on an (electromagnetic) interaction between the third circuit (third coil) and the third electromagnetic field which can be sensed by the second coil. The fourth electromagnetic field is advantageously generated based on, and possibly proportional to, the detected third electromagnetic field in the third coil, such as proportional to a signal (e.g., a voltage) induced by the third electromagnetic field in the third coil. By so doing a further reference plane is defined by a plane orthogonal to the fourth winding axis, the further reference plane intersecting a location where the third electromagnetic field has a direction oriented orthogonal to the third winding axis, or a plane orthogonal to the directional component, the further reference plane intersecting a location where the third electromagnetic field has a direction oriented orthogonal to the third winding axis. The polarity of the fourth electromagnetic field changes sign across the further reference plane. The processing unit can then be configured to detect a polarity of the fourth electromagnetic field received by the second coil. Based thereon, a displacement direction between the third coil and the further reference plane can be detected. Embodiments comprising such a fourth coil enable the alignment along two oblique and possibly orthogonal directions, e.g. through reception of the second and the fourth electromagnetic field by the second coil. The system is for instance configured for alternatingly generating the first and the third electromagnetic field. Alternatively or additionally, the system is configured for generating the first and the third electromagnetic field at different frequencies. Advantageously, these different frequencies are selected such that at both frequencies a similar amplification is achieved of the reflected second electromagnetic field from third coil, for instance by choosing an equal frequency difference with respect to a resonance frequency of a resonant third circuit.

Alternatively, the fourth coil can be coupled to the detection circuit and is configured to interact with the second electromagnetic field. Preferably, the fourth winding axis is orthogonal to the first winding axis and oblique and possibly orthogonal to the second winding axis. Preferably, the (directional component of the) third winding axis is parallel to the first winding axis. The coil centres of the second and fourth coils can coincide or be offset. By so doing a further reference plane is defined by a plane orthogonal to the fourth winding axis, the further reference plane intersecting a location where the second electromagnetic field has a direction oriented orthogonal to the fourth winding axis, or a plane orthogonal to the directional component, the further reference plane intersecting a location where the second electromagnetic field has a direction oriented orthogonal to the fourth winding axis. The processing unit is configured to detect a further polarity of the second electromagnetic field received by the fourth coil. A displacement direction between the third coil and the further reference plane can be determined based on the detected further polarity, wherein the further polarity of the second electromagnetic field changes sign across the further reference plane.

Advantageously, the first coil defines a first coil center, and wherein the fourth winding axis and the first winding axis intersect at the first coil center, preferably the first, second and fourth winding axes intersect at the first coil center. Such an arrangement is most compact. Also, it facilitates providing a single component comprising both the first and fourth coil, simplifying alignment of the first and fourth coil. Advantageously, the first coil center, the second coil center and the fourth coil center coincide.

It is possible to combine multiple ones of the above guiding systems in a combined guiding system. By way of example, the first coil and the fourth coil can be coupled to driving circuits generating respectively the first and the third electromagnetic fields. The third coil and an additional third coil is provided, wherein the third coil is configured to interact with the first electromagnetic field generating the second electromagnetic field and the additional third coil is configured to interact with the third electromagnetic field generating the fourth electromagnetic field. The third coil and the additional third coil advantageously have orthogonal winding axes. The winding axes of the third coil and the additional third coil are advantageously essentially parallel to the winding axes of the first coil and the fourth coil, respectively. Alternatively, or in addition, multiple ones of the third coil can be provided, e.g. having orthogonal winding axes. The second electromagnetic fields emitted by each of the multiple third coils can be detected by one second coil, or by multiple respective second coils.

According to a second aspect of the present disclosure, there is provided a manipulator assembly as set out in the appended claims. The manipulator assembly comprises the guiding system according to the first aspect. The guiding system is configured to guide a manipulator and a target into alignment with each other.

According to a third aspect of the present disclosure, there is provided a method as set out in the appended claims. Methods of the present disclosure comprise generating a first electromagnetic field by a first coil having a first winding axis and detecting a polarity of a second electromagnetic field received by a second coil having a second winding axis essentially orthogonal to the first winding axis. The second electromagnetic field is generated by a third coil interacting with the first electromagnetic field. The third coil has a third winding axis having a directional component parallel to one of the first winding axis and the second winding axis. A displacement direction between the third coil and a reference plane is determined based on the detected polarity of the second electromagnetic field, wherein the polarity changes sign across the reference plane.

Methods as described herein can further comprise guiding a movement between the third coil and the reference plane based on the displacement direction. Preferably the third coil and/or the first reference plane are moved into alignment with one another.

Advantageously, a third electromagnetic field is generated by a further coil having a further winding axis essentially orthogonal to the second winding axis. The third electromagnetic field interacts with the third coil to generate a fourth electromagnetic field. A polarity of the fourth electromagnetic field received by the second coil is detected and a displacement direction between the third coil and a further reference plane is determined based on the detected polarity of the fourth electromagnetic field, wherein the polarity of the fourth electromagnetic field changes sign across the further reference plane. The further winding axis can be oblique and possibly orthogonal to the first winding axis, allowing to create the further reference plane and hence an additional guiding direction. Alternatively, the further winding axis is essentially parallel to and offset from the first winding axis, allowing to increase a range of detection.

Advantageously, a further polarity of the second electromagnetic field received by a further coil having a further winding axis essentially orthogonal to the first winding axis is detected. A displacement direction between the third coil and a further reference plane based on the detected further polarity is determined, wherein the further polarity of the second electromagnetic field changes sign across the further reference plane. The further winding axis can be oblique and possibly orthogonal to the second winding axis allowing to create the further reference plane and hence an additional guiding direction. Alternatively, the further winding axis is essentially parallel to and offset from the second winding axis, allowing to increase a range of detection.

Methods as described herein can be implemented in guiding systems of the present disclosure.

**Brief description of the figures**

Aspects of the invention will now be described in more detail with reference to the appended drawings, wherein same reference numerals illustrate same features.

Fig. 1 represents a diagram of a charging system of an electric vehicle incorporating a guiding system as described herein.
Fig. 2 represents a diagram of a guiding system as described herein comprising first, second, third and fourth circuits and respective coils.
Fig. 3A represents a diagram of three orthogonal winding planes of respective coils of a guidance system.
Fig. 3B represents a core and three coils wound about the core having mutually orthogonal winding axes and coinciding centres.
Fig. 4A represents a diagram of a guidance system with a first unit comprising a transmitter coil and a receiver coil, and a transponder coil moving relative to the first unit along the x-axis; Fig. 4B represents a normalized received signal of the second electromagnetic field induced in the receiver coil.

Fig. 4C represents a diagram of a guidance system with a first unit comprising a transmitter coil and a receiver coil, and a transponder coil moving relative to the first unit along the z-axis; Fig. 4D represents a normalized received signal of the second electromagnetic field induced in the receiver coil.

Fig. 5 represents an arrangement of transmitter coil, receiver coil and transponder coil, in which the centres of the transmitter and receiver coils do not coincide.

Fig. 6A represents a transponder coil moving relative to a transmitter/receiver unit, in which the winding axis of the transponder coil is orthogonal to the winding axis of the transmitter coil; Fig. 6B represents a situation in which the winding axis of the transponder coil is inclined with a small angle relative to the winding axis of the receiver coil; Fig. 6C represents a situation as in Fig. 6B, in which the transponder coil has moved so that it has a smaller z-offset relative to the transmitter coil.

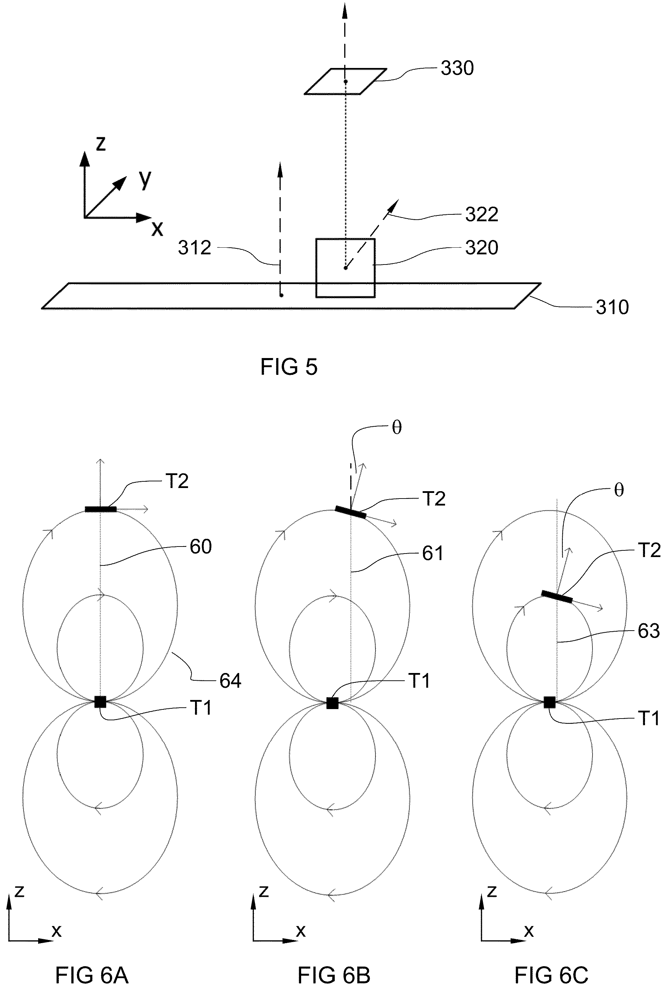

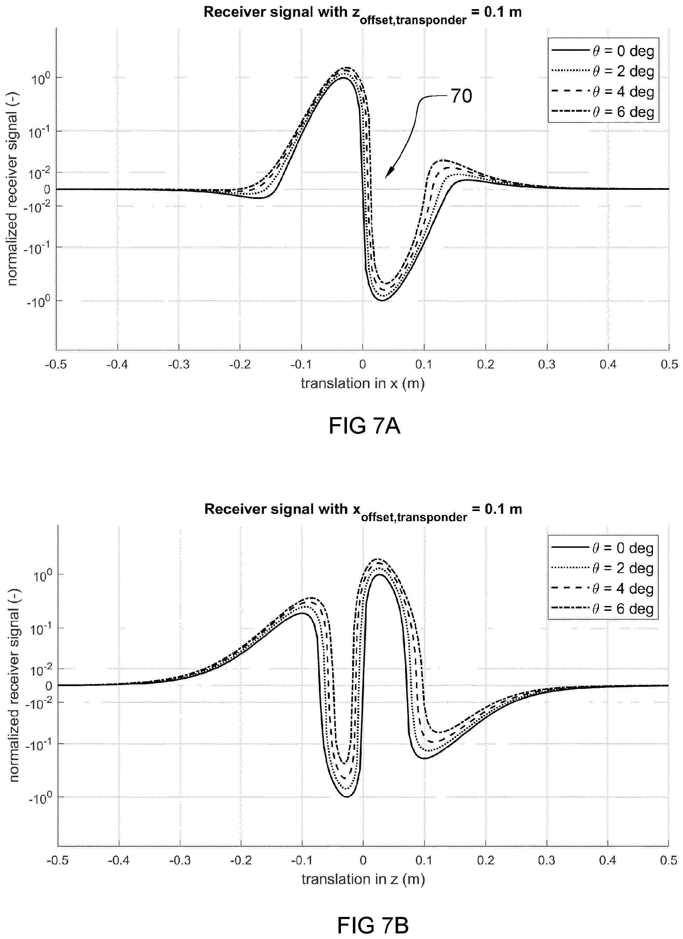

Fig. 7A represents plots of the signal received by the receiver coil for different angles of inclination corresponding to the situation in Fig. 6B and when the transponder coil is translated along the x-direction with a constant z-offset; Fig. 7B represents plots of the signal received by the receiver coil for different angles of inclination corresponding to the situation of Fig. 6B when the transponder coil is translated along the z-direction with a constant x-offset. The simulations in relation to Figs. 7A-7B are made with all coils having a same square size of 5 mm x 5 mm, field frequency of 120 kHz and resonance frequency of the third coil equal to the field frequency. The plots Figs. 7A-7B are field strength normalized to a basis situation with no rotation and no offset.

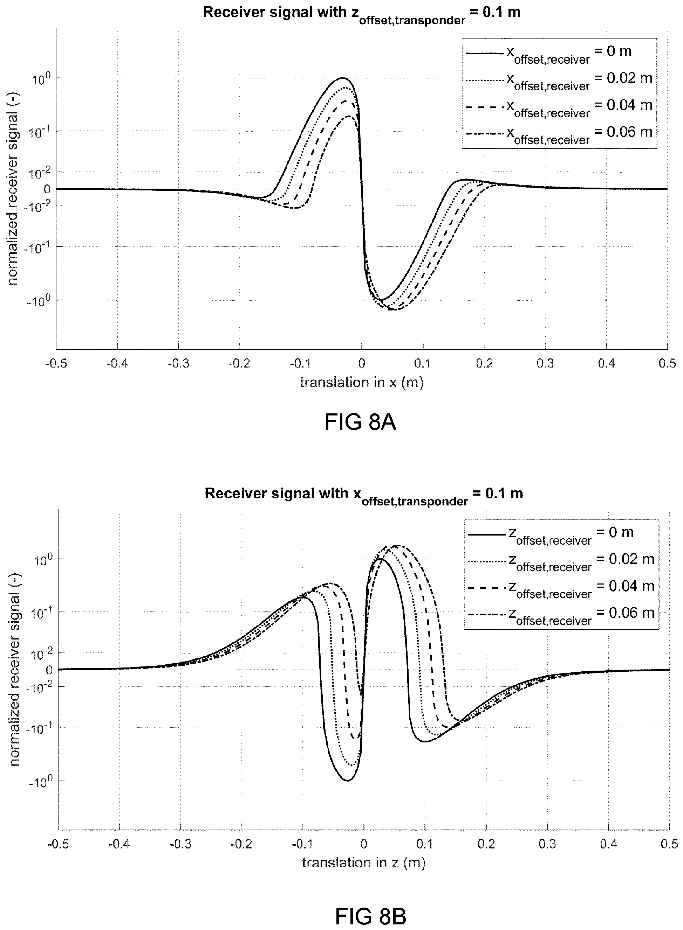

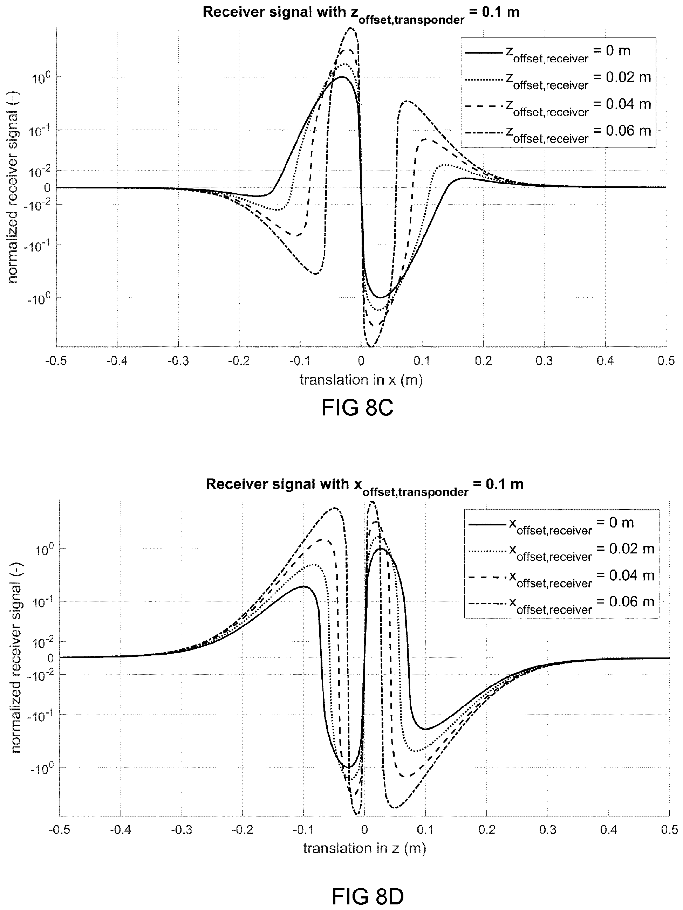

Fig. 8A represents plots of the effective received signal in the receiver coil for different receiver coil offsets in the x-direction when the third (transponder) coil is translated in the x-direction and the transponder coil has a z-offset relative to the transmitter coil; Fig. 8B represents plots of the effective received signal in the receiver coil for different receiver coil offsets in the z-direction and the third (transponder) coil is translated in the z-direction and the transponder coil has a x-offset relative to the transmitter coil; Fig. 8C represents plots of the effective received signal in the receiver coil for different receiver coil offsets in the z-direction and the third (transponder) coil is translated in the x-direction and the transponder coil has a z-offset relative to the transmitter coil; Fig. 8D represents plots of the effective received signal in the receiver coil for different receiver coil offsets in the x-direction and the third (transponder) coil is translated in the z-direction and the transponder coil has a x-offset relative to the transmitter coil. The simulations in relation to Figs. 8A-8D are made with all coils having a same square size of 5 mm x 5 mm, field frequency of 120 kHz and resonance frequency of the third coil equal to the field frequency. The plots Figs. 8A-8D are field strength normalized to a basis situation with no rotation and no offset.

Fig. 9A represents a graph of the field orientation of a transmitted first electromagnetic field of a first coil with a winding axis parallel to the x-direction; Fig. 9B represents a graph of the field orientation of a second electromagnetic field emitted by a transponder (third) coil with a winding axis in the z-direction.

Fig. 10 represents a diagram of the third (transponder) circuit as utilized in the present disclosure.

Fig. 11 represents a diagram of the third (transponder) circuit including a variable impedance.

## Detailed Description

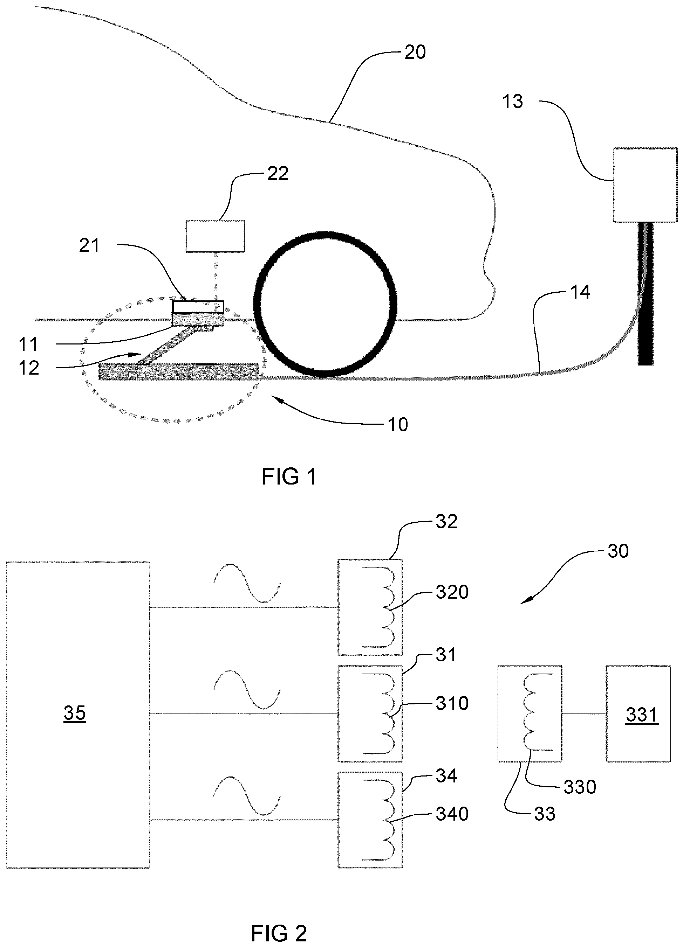

Referring to Fig. 1, one example of systems and methods of the present disclosure relates to magnetic field-based connector guiding, which may be utilized for automatically positioning an energy transfer unit for charging a battery 22 of an electric vehicle (EV) 20, such as a passenger vehicle, commercial vehicle, heavy duty vehicle, industrial vehicle (e.g. automatic guided vehicle) or drone.

Such a charging system 10 may comprise a charging robot 12 or manipulator configured to move a first energy transfer unit 11, such as a charging connector or a plug or a short-range inductive power transfer unit, towards a second energy transfer unit 21 mounted on the vehicle 20, such as an inlet or a socket, or a second inductive power transfer unit. The first energy transfer unit 11 may receive power from a charging station 13 through a cable 14. Magnetic field-based connector guiding may be used to guide the first energy transfer unit 11 by means of the charging robot 12 towards an alignment position wherein energy can be transferred between the first energy transfer unit 11 and the second energy transfer unit 21, e.g. an alignment position wherein the energy transfer units 11, 21 are brought into engagement to establish an electrical connection (e.g. wherein the plug is aligned with the socket for mating).

In the shown embodiment, the second energy transfer unit 21 is provided underneath the vehicle 20, and is also referred to as an Automatic Connection Device Underbody (ACDU). This however is just an example. It may just as well be provided at a side of the vehicle, on top of the vehicle, or at any other suitable location.

Referring to Fig. 2, an example of a guiding system 30 according to the present invention may comprise a first circuit 31, a second circuit 32, a third circuit 33, optionally a fourth circuit 34, and a processing unit 35. The first circuit 31 may be configured as a first transmitter circuit comprising a first coil 310. The second circuit 32 may be configured as a receiver circuit comprising a second coil 320. The fourth circuit 34 may be configured as a second transmitter circuit or as a second receiver circuit and comprises a fourth coil 340. The third circuit 33 may be configured as a transponder circuit comprising a third coil 330. The third circuit 33 can further comprise a transponder driving circuit 331. The first transmitter circuit and the second transmitter circuit may each comprise (or be coupled to) a different driving circuit for instance operating at different frequencies or comprise (or be coupled to) a common driving circuit configured to alternatingly (e.g. sequentially) operate the first transmitter circuit and the second transmitter circuit.

Referring to Figs. 1 and 2, the processing unit 35 and the first, second and possibly fourth circuits 31, 32 and 34 can be provided on or attached to the first energy transfer unit 11 and/or charging robot 12. At least the first circuit 31 or the second circuit 32 is configured for moving in correspondence with the first energy transfer unit 11. The third circuit 33 can be provided on or attached to the vehicle 20, e.g. integrated in, or in proximity of, the second energy transfer unit 21. It will be convenient to note that other configurations are possible, e.g. where the third circuit is provided on the charging robot and the first, second and optionally fourth circuits are provided on the vehicle.

Any one or all of the first , second, third and fourth circuits can be formed as tank circuits, in which the respective coil is connected to a respective capacitor to form a resonant LC circuit. The processing unit 35 is advantageously configured to supply an AC current to the transmitter circuits. Typically, the transmitter circuit(s) 31 and optionally 34 as well as the transponder circuit 33 are formed as a tank (resonant) circuit, whereas the coil 320 of the receiver circuit 32 is not resonant.

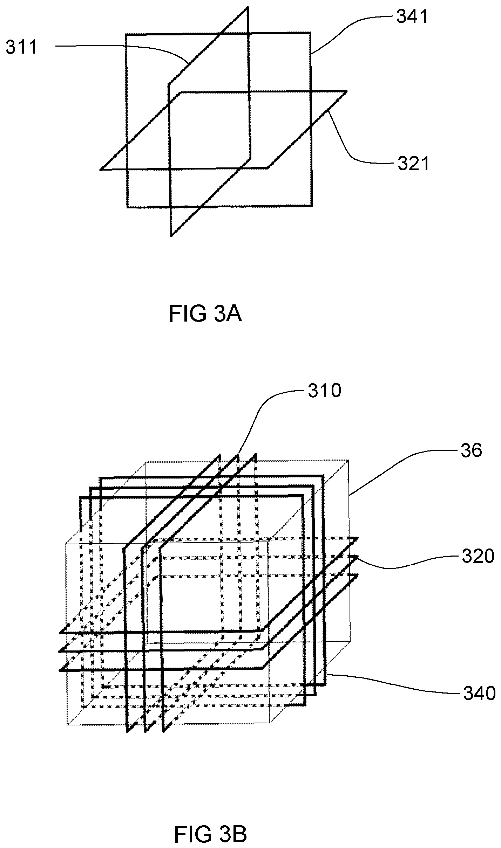

The first, second, third and fourth coils each comprise conductors wound about a first, second, third and fourth winding axis, respectively. Each of the first, second, third and fourth coils hence defines a first, second, third and fourth cross sectional plane of the coil respectively (also referred to as winding plane), which is orthogonal to the respective first, second, third and fourth winding axis. Referring to Fig. 3A, the first, second and fourth cross sectional planes 311, 321, 341 respectively are represented. The first and second coils are arranged such that their first and second cross sectional planes 311, 321, and hence their first and second winding axes are essentially orthogonal. Advantageously, the fourth winding axis is essentially orthogonal to the first and to the second winding axis, i.e. the fourth cross sectional plane 341 is essentially orthogonal to the first and second cross sectional planes 311, 321. It is generally not required, although it can be advantageous, that the centres of each of the first, second and optionally fourth coils coincide.

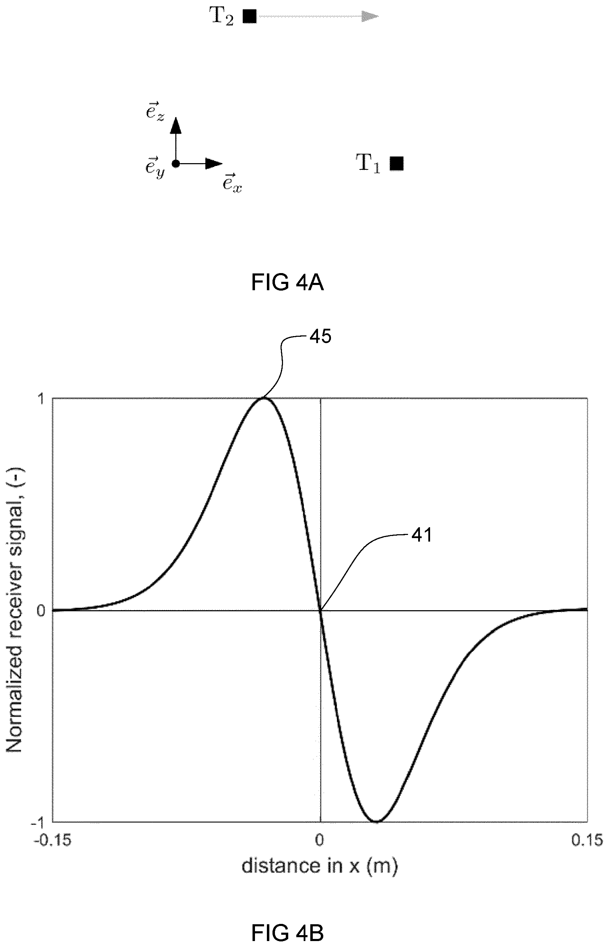

Referring to Fig. 4A-D, alignment of a transmitter coil and a transponder coil, or of a receiver coil and a transponder coil can be achieved in a three-coil guiding system along two orthogonal axes, for instance an x-axis $\vec{e}_x$ and a z-axis $\vec{e}_z$ of a Cartesian coordinate system. Adding a further transmitter or receiver coil (fourth coil 340) orthogonal to both the transmitter coil (first coil 310) and the receiver coil (second coil 320) enables an alignment in a three dimensional space, for instance along an x-axis $\vec{e}_x$, a y-axis $\vec{e}_y$ and a z-axis $\vec{e}_z$ of a Cartesian coordinate system.

T1 represents a first unit comprising a transmitter coil having a winding axis parallel to the x-axis and a receiver coil having a winding axis parallel to the z-axis. For sake of simplicity, it is assumed that the transmitter coil and the receiver coil have coinciding centres and are fixedly positioned relative to one another. T2 represents a transponder coil having a winding axis parallel to the z-axis. In Fig. 4A, T1 and T2 are offset in a direction parallel to the z-axis and move relative to one another along the x-axis. A movement of T2 relative to T1 parallel to the x-axis as seen in the xz-plane involves firstly T1 and T2 approaching one another, secondly T1 and T2 being in registration with each other and thirdly T1 and T2 departing from one another. When the transmitter coil of T1 is operated to generate a first electromagnetic field, this first field is seen by the transponder coil T2, causing in reaction, the generation of a second electromagnetic field by the transponder coil. The second electromagnetic field is seen by the receiver coil of T1 since these have parallel winding axes. When however T1 and T2 are in registration along the x-axis, the transponder coil will be at a position in which the cross sectional plane is parallel to the field lines of the first electromagnetic field and the first electromagnetic field will not induce the second electromagnetic field, causing no detection of the second electromagnetic field by the receiver coil of T1. A curve of the signal received by the receiver coil when moving T1 relative to T2 as in Fig. 4A, is shown in Fig. 4B. During the approach phase, the intensity of the received signal increases towards a peak value 45. Subsequently, there is a relatively sharp drop in signal intensity when T1 and T2 are substantially aligned along the x-axis and a zero crossing 41 (i.e., a change of polarity) can be observed when T1 and T2 cross one another along the x-axis. Subsequently, when T1 and T2 move further apart, the received signal shows a curve similar to the approach movement, but substantially mirrored.

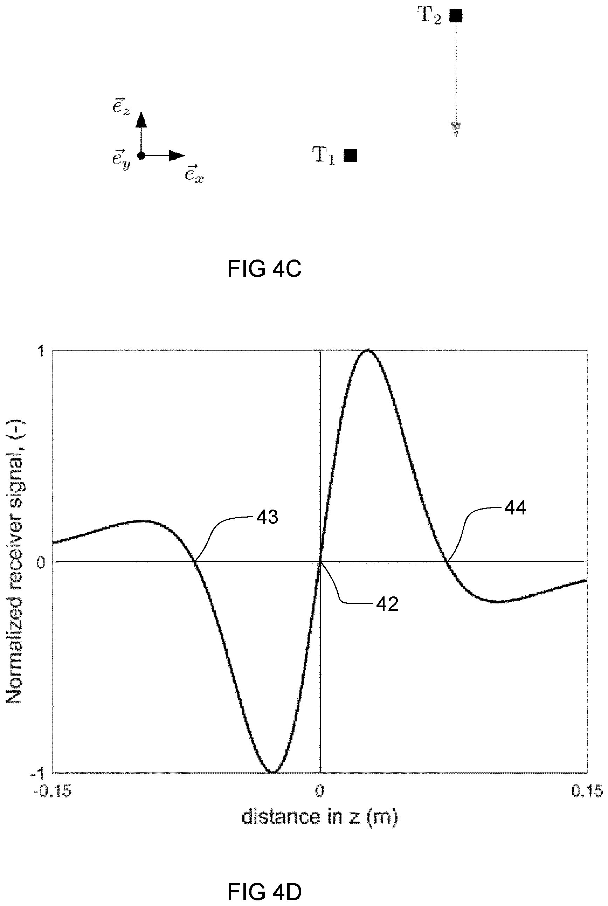

Referring to Fig. 4C, T1 and T2 may also be moved relative to one another along a direction parallel to the z-axis as seen in the xz-plane, while T1 and T2 are offset along the x-axis. A curve of the signal received by the receiver coil when moving T1 relative to T2 along this direction, wherein T1 and T2 have an offset in a direction parallel to the x-axis, is shown in Fig. 4D. Here the intensity of the received signal along this displacement results in a qualitatively similar curve as the one in Fig. 4B, in which T2 crossing T1 along the z-axis can be detected by a zero crossing 42 of the signal received by the receiver coil of T1. Also in this case, when T2 is in registration with T1 along the z-axis no second electromagnetic field is induced in the transponder coil.

It will be convenient to note that the curve of Fig. 4D features two additional zero-crossings 43, 44. The zero crossing 42 is caused by the fact that the second electromagnetic field emitted by the transponder coil in response to the first electromagnetic field changes polarity during the movement. The two additional zero crossings 43, 44 are caused by a change in polarity of the signal received by the receiving coil without a change in polarity of the second electromagnetic field emitted by the transponder coil. Although not shown in fig. 4B, such a behaviour can also be observed in the situation of Fig. 4A. However, the received signal by the receiver coil only shows symmetry when T1 and T2 are substantially aligned along the axis of movement (x-axis or z-axis), thereby providing easy detection of the alignment position.

A similar detection is possible for a configuration in which the transponder coil T2 has a winding axis parallel to the winding axis of the transmitter coil of T1 (i.e. parallel to the x-axis). In such case, graphs qualitatively similar to the graphs of Figs. 4B and 4C are obtained for motions along x-axis and z-axis respectively (as in Figs. 4A and 4C). In this case, when T1 and T2 are in registration (along either x or z), the cross sectional plane of the receiver coil of T1 is parallel to the field lines of the second electromagnetic field generated by the transponder coil T2, and no signal is detected by the receiver coil, leading to zero crossings similar to zero crossings 41 and 42.

These zero crossings 41 and 42 hence refer to a situation in which the phase of the signal induced in the receiver coil due to the second electromagnetic field experiences a shift by 180°, or in other words, the polarity of the signal changes sign. Such a zero crossing (polarity change) can be easily distinguished from other zero crossings such as 43 and 44 in Fig. 4D by a high degree of symmetry of the received signal in proximity of the zero crossing. Additionally, the zero crossings 41 and 42 will occur regardless of the offset along z in Fig. 4A or the offset along x in Fig. 4C.

A reference plane can hence be defined as a plane in which the signal detected by the receiver coil shows a zero crossing when the transponder crosses the reference plane and possibly, the absolute value of the signal detected by the receiver coil has substantially mirror symmetry across the reference plane, i.e. at both sides of the zero crossings 41 and 42 in Figs. 4B and 4C. In the configuration of Figs. 4A and 4C, the winding axis of the transponder coil T2 (i.e. the third winding axis) is essentially parallel to the winding axis of the receiver coil (i.e. the second winding axis) - and hence orthogonal to the winding axis of the transmitter coil. In this case, two (orthogonal) reference planes can be defined, i.e.: (i) a plane orthogonal to the winding axis of the transmitter coil (i.e. parallel to the cross sectional plane of the transmitter coil) and crossing the centre of the transmitter coil, as is the case in Fig. 4A or (ii) a plane orthogonal to the winding axis of the transponder coil and crossing the centre of the transmitter coil, as is the case in Fig. 4C. In both cases, the reference plane is hence positioned such that it comprises a location where the first electromagnetic field has a direction oriented orthogonal to the winding axis of the transponder coil such that the first electromagnetic field does not induce an interaction with the transponder coil, hence not generating the second electromagnetic field at the reference plane). It depends on the overall setup and movement direction, which of these two reference planes is used for alignment guiding.

In an alternative configuration, the winding axis of the transponder coil is essentially parallel to the winding axis of the transmitter coil, and hence orthogonal to the winding axis of the receiver coil. In such a configuration, two reference planes can be defined by: (i) a plane orthogonal to the winding axis of the receiver coil and crossing a centre of the receiver coil, or (ii) a plane orthogonal to the winding axis of the transponder/transmitter coil and crossing a centre of the receiver coil. In both cases, the reference plane is positioned such that it comprises a location where the second electromagnetic field has a direction oriented orthogonal to the winding axis of the receiver coil (i.e. the field direction is parallel to a cross sectional plane of the receiver coil such that the second electromagnetic field does induce an interaction with the receiver coil, hence the second electromagnetic field is not sensed by the receiver coil at the position of the reference plane.

The measured signal at the receiver is the resulting signal of the measured magnetic field as a combination of the first field coupled into the third coil and the reflected second field received by the receiver coil. Therefore, the measured polarity is a result of the combined polarity of the two reference planes. Potential ambiguity can be resolved by utilizing external information of the location with respect to one of the reference planes e.g. by precondition of the system, a known displacement, external sensors, additional transmitters or sensors.

In practical situations, the winding axis of the transponder coil T2 may not be parallel to the winding axis of the receiver coil of T1, or may not be orthogonal to it. Even in cases in which the winding axis of the transponder (third) coil T2 may be oblique with respect to the winding axis of the receiver coil, it can be shown that a zero crossing still exists and can be detected. Referring to Figs. 6A-C, the effect of a non-perfectly orthogonal transponder coil T2 (third coil) is illustrated. Fig. 6A shows a reference plane 60 when the winding axis of T2 is perfectly parallel to the winding axis of the receiver coil (second coil) of transmitter/receiver unit T1 (and orthogonal to the winding axis of the transmitter coil (first coil) of T1) resulting in a perfect alignment of the transponder and transmitter after guiding. The first electromagnetic field generated by the transmitter coil is schematically illustrated by a few field lines 64. Fig. 6B illustrates the case in which the winding axis of the transponder coil T2 is inclined with a small angle, of e.g. $\theta = 10°$ relative to the winding axis of the receiver coil (while still orthogonal to the winding axis of the transmitter coil). This results in a reference plane 61 which is offset relative to the centre of the transmitter coil. Here an error is introduced in the location where the polarity changes sign as shown in Fig. 7A for a translation trajectory of the transponder coil T2 in the x-direction at a constant relative z-height of 0.1 m relative to T1, in which the winding axis of the transponder coil T2 is inclined with angle θ relative to the winding axis of the receiver coil. It results from Fig. 7A that the introduced error in the location of the central zero-crossing 70 is relatively small. Such an error is similarly introduced for the other (second) reference plane when the transponder coil T2 is translated in the z-direction, as shown in Fig. 7B for a constant relative x-offset of 0.1 m. Also in this case, the introduced error in the location of the zero-crossing is relatively small.

The introduced error in the x-direction due to such rotation of the third coil can be expressed as,

$$\epsilon_x(\theta) = \Delta z \tan\left(\frac{4}{3}\theta\right)$$

where $\Delta z$ is the offset in the z-direction between the third coil and the first coil, and $\theta$ is the rotation of the third coil with respect to the orthogonal direction. The introduced error in the z-direction due to such rotation of the third coil can be expressed as,

$$\epsilon_z(\theta) = \Delta x \tan\left(\frac{5}{3}\theta\right)$$

where $\Delta x$ is the offset in the x-direction between the third coil and the first coil.

Referring to Fig. 6C, it is shown that the error due to a non-perfectly orthogonal transponder coil decreases when the relative distance between the unit T1 and the transponder coil is decreased. Here, the reference plane 63 is located closer to the transmitter coil centre compared to Fig. 6B. Hence, it is still possible to move towards the ideal alignment position (i.e. reference plane 60 as in Fig. 6A) since the error converges to zero when the relative distance (z-offset) decreases. Hence, the error at the end-position where T1 and T2 mate can be negligible even in case of misalignment of the orientation of the winding axis of the transponder coil (third coil).

Applied to the charging system 10 (Fig. 1), the transmitter/receiver unit T1 can be provided on the charging robot 12 and/or first energy transfer unit 11, while the transponder unit (coil) T2 is provided in the second energy transfer unit 21 provided on the vehicle 20. A method of guiding the first energy transfer unit 11 by the charging robot 12 can comprise a step of moving the first energy transfer unit 11 in a plane substantially orthogonal to a winding axis of the transponder coil (e.g. a horizontal plane), such as a sweeping operation. While doing so, the guiding system 30 that operates movement of the charging robot 12 monitors the signal received by the receiver coil 320 due to a second electromagnetic field generated by the transponder coil 330 and determine a position of the first energy transfer unit 11 relative to a zero-crossing (i.e. a polarity change) of the signal (e.g. zero crossing 41 in Fig. 4B). This way, a direction of motion for the charging robot towards the zero-crossing is determined. This step corresponds to the procedure outlined in relation to Fig. 4A, provided however that T2 stands still while T1 is moving relative to T2, e.g. in the x-direction.

It will be convenient to note that in the systems and methods of the present disclosure, knowledge of the signal shape and/or information from additional sensors can be utilized to determine the correct zero crossing - and hence polarity change - in the received signal. Particularly, with reference to Fig. 4D, discriminating zero crossing 42 from zero crossings 43 and 44 can be performed by measuring the signal strength allowing to locate the peaks and valleys between the zero crossings, e.g. by performing a sweep. The zero crossing of interest is the one located between the highest peak and lowest valley of the signal. Alternatively, it is possible to determine the slope of the signal around each zero-crossing to check the symmetry. The slope can be determined based on speed or position measurements. Finally, pre-knowledge on the geometry can be utilized to find the correct zero-crossing faster, e.g. when the direction from which the target (e.g. transponder) is approached by the transmitter/receiver coils is known.

When a suitable zero-crossing (e.g. zero crossing 41 in Fig. 4B) is detected, the guiding system knows that the reference plane (e.g. plane 60 in Fig. 6A or plane 61 in Fig. 6B) corresponding to this zero-crossing has been crossed by the first energy transfer unit/charging robot. The reference plane hence determines an alignment position between the first and second energy transfer units 11, 21. The guiding system can instruct the charging robot to position the first energy transfer unit 11 in registration with the reference plane 60 (or 61), and possibly move the first energy transfer unit closer to the second energy transfer unit 21 along a vertical direction (z-direction). By so doing, a situation as illustrated in Fig. 6C is obtained, and the guiding system can continue to monitor the signal received in the second (receiver) coil 320, to detect whether there is still alignment with the zero-crossing, and possibly adjust the position of the reference plane. In the case of Fig. 6B, when the energy transfer unit (or unit T1) is moved closer to T2 along the z-direction, the system detects that it is not anymore aligned with the reference plane, as the reference plane has shifted from 61 to plane 63 in fig. 6C. Hence, the guiding system can instruct to move the energy transfer unit to align with reference plane 63. The above steps can be performed in an iterative manner until a sufficient precision is obtained such that a mating or engaging/connecting operation between the two energy transfer units can be started. When the transmitter/receiver unit T1 is provided with a fourth coil 340, the above procedure can be used to determine a reference plane along the y-direction as well.

Referring to Fig. 3B, the first, second and optionally the fourth coil 310, 320 and 340 respectively may each be wound around a common core 36, for instance comprising a ferromagnetic material, along a different one of three orthogonal winding axes. Preferably the three coils 310, 320, 340 are wound such that each coil winding axis is perpendicular to the other two coil winding axes, and such that the three coil winding axes cross in one centre point. It will be convenient to note that the winding axis of a coil need not be aligned with the centre of (one of) the other coil(s), although this often results in a higher cross talk between the signals, and specifically in a lower signal-to-noise ratio of the measured signal. One example is shown in Fig. 5, where the winding axis 312 of one of the transmitter or receiver coils (e.g. transmitter coil 310) is centred with respect to the other one of these two coils (e.g. receiver coil 320 with winding axis 322). This configuration has limited cross talk between the transmitter and receiver coil, while the coil 310 could advantageously increase the working range of the guidance system in the x-direction by stretching coil 310 in this direction. The cross talk would influence the system negatively when the two coils 310, 320 would not have been centred in the y-direction, or when the coil 320 would be oriented 90 degrees rotated around the z-axis.

It is possible to increase the working range of the guiding system in a certain direction by changing the location of the receiver coil 320 (or by the addition of one or more receiver coils) in such direction. In Fig. 8A, the effective received signal is shown in case the transmitter coil has a winding axis parallel to the x-axis and the receiver coil and the transponder coil both have winding axes parallel to the z-axis, and wherein the receiver coil has an offset in the x-direction relative to the transmitter coil and the third (transponder) coil is translated in the x-direction. The range of the received signal is increased in the direction of the offset location of the receiver coil (i.e. positive x-direction in Fig. 8A), while the range (amplitude) of the received signal decreases in the opposite direction (i.e. negative x-direction in Fig. 8A). It can further be observed that the position of the zero-crossing does not change along the x direction, and hence the location of the reference plane does not change, in particular when the distance between the receiver coil and the transmitter coil is shorter than the offset in the z-direction between the transmitter (first) coil and the transponder (third) coil.

Similarly, referring to Fig. 8B, the change of polarity when translated in the z-direction can be measured with a receiver coil having an offset in the z-direction relative to the transmitter coil. In Fig. 8B the transmitter, receiver and transponder coils have same orientations as in Fig. 8A. The sensing range is extended in the direction of the offset of the receiver coil (i.e. positive z-direction in Fig. 8B) and decreased in the opposite direction (i.e. negative z-direction in Fig. 8B) while the location at which the change of polarity (zero-crossing) occurs does not change, in particular when the distance between the transmitter coil and the receiver coil is smaller than half the offset in the x-direction between the transmitter (first) coil and the transponder (third) coil.

Referring to Fig. 8C, when the transponder coil is moved along the x-axis with a z-offset relative to the transmitter coil, the received signal increases in strength with increasing the offset of the receiver coil in z-direction relative to the transmitter coil, but without affecting the location of the reference plane (central zero crossing of the signal). The detection range of the received signal is not affected. Referring to Fig. 8D, when the transponder coil is moved along the z-axis with an x-offset relative to the transmitter coil, the received signal increases in strength with increasing the offset of the receiver coil in x-direction relative to the transmitter coil, but without affecting the location of the reference plane (central zero crossing of the signal). The detection range of the received signal is not affected. In Figs. 8C-D the transmitter, receiver and transponder coils have same orientations as in Fig. 8A.

It results from Figs. 8A-D that positioning the receiver coil of T1 at an offset position relative to the transmitter coil of T1 can increase the detection range and/or can increase the strength of the detected signal. In one advantageous embodiment, multiple receiver coils can be provided at offset locations from the transmitter coil to increase the range of detection, e.g. referring to Fig. 8A, a first receiver coil can be positioned at a positive x-offset and a second receiver coil can be positioned at a negative x-offset location relative to the transmitter coil to increase the detection range. The offset location of a coil is determined with reference to its coil centre. The positive and negative x-offsets can be identical or different. Such a configuration can additionally be used to discriminate between the zero crossing 42 and the zero crossings 43 and 44 in Fig. 4D. As illustrated in Fig. 8A, the location of the normal zero crossing does not shift while the additional zero crossing that has a positive x-offset gets a larger offset and the zero crossing that has a negative x-offset gets a smaller offset. Providing two receiver coils with a different x-offset can thus also be used to discriminate between the real zero crossing and the additional zero crossings.

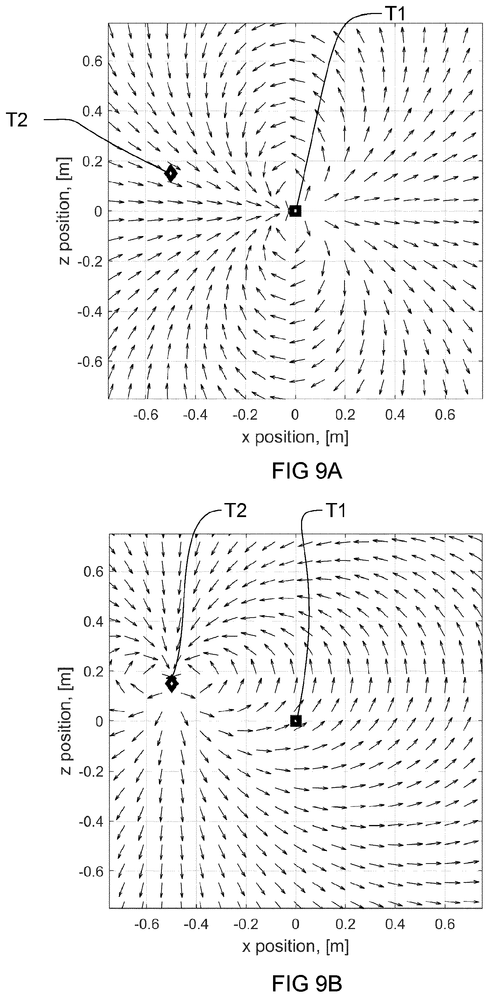

Referring to Fig. 9A the field orientation of a transmitted first field of a first coil with a winding axis in the x-direction is shown using arrows tangential to the field lines, and referring to Fig. 9B the field orientation of a second field emitted by a transponder (third) coil with a winding axis in the z-direction is shown using arrows tangential to the field lines.

Advantageously, one or more additional receiver coils or one or more additional transmitter coils can be provided. These additional receiver or transmitter coils can have parallel winding axes, which can be parallel to the winding axis of the second (receiver) coil or the first (transmitter) coil, respectively. By way of example, multiple receiver coils with parallel winding axes can be arranged at spaced apart locations and each receiver coil can be coupled to a detection circuit to determine a displacement direction or position relative to a respective reference plane. This allows to increase the working range of the system. Particularly, the plurality of reference planes can define spatial compartments or sectors, wherein each compartment is delimited by reference planes related to different receiver coils. This allows the system to determine in which compartment or sector the transponder is moving.

Systems and methods of the present disclosure can find application in other areas, such as vehicle guiding or alignment checks, e.g. in systems for wireless charging of electric vehicles, automated positioning and/or alignment systems, etc.

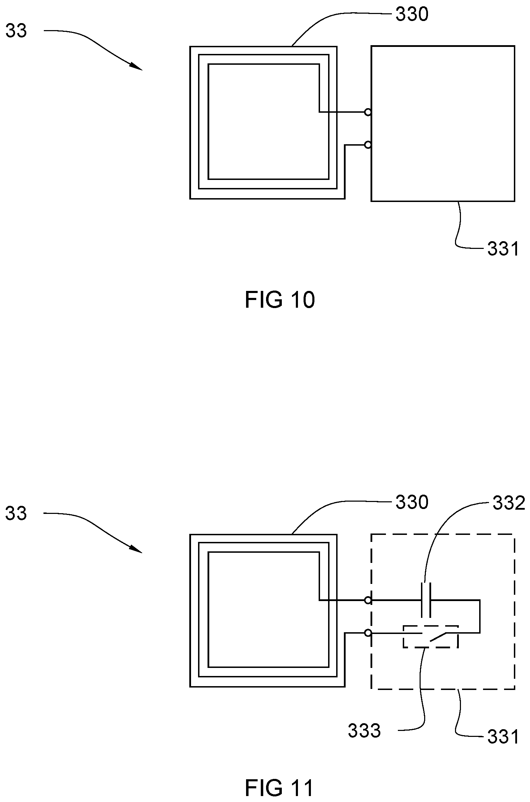

Referring to Fig. 10, the third circuit 33 can comprise the third coil 330 coupled to a driving circuit 331. Driving circuit 331 can comprise, or consist of, an active amplifier circuit, as known in the art. Multiple types of active amplifier circuits are known, and these can be appropriately utilized to amplify the signal induced in the third coil 330 by the first electromagnetic field. In some examples, the active amplifying circuit is configured to receive a signal (e.g. induced by the first electromagnetic field in the third coil), amplify the signal and to re-transmit the amplified signal via the third coil 330. One possible active amplifier circuit that can be utilized as driving circuit 331 is described in US 6838989.

Influences from the environment can deteriorate the received signal. These influences can be filtered by modulating the impedance of the third (transponder) circuit. Referring to Fig. 11, the third circuit 33 can comprise an element 333 allowing to modulate or adapt the impedance of the third circuit 33. In particular, the third circuit can comprise the third coil 330 coupled to the driving circuit 331, which may comprise an active amplifier circuit as described in relation to Fig. 10. Driving circuit 331 can comprise a tuning capacitor 332, which can be series or parallel connected to the third coil 330 to form a resonant LC circuit. Element 333 can be a variable impedance element, in particular a switch configured to interrupt a current path through the third coil 330 and/or the tuning capacitor 332. The element 333 can be actively operated to change a state of the third circuit between a first impedance state, e.g. closed switch and current is allowed to flow through the third coil 330 generating the second electromagnetic field, and a second impedance state, e.g. open switch in which current is interrupted and the second electromagnetic field being not generated, or very weakly generated.

It is beneficial when the processing unit uses the first impedance state of the third circuit and the second impedance state of the third circuit. The environmental interference (e.g. from relatively static metallic objects or direct coupling of the transmitted first field to the second coil) is similar in this first and second impedance state of the third circuit. The processing unit can use this property to compensate for this environmental interference. When additionally, the processing unit can distinguish the first impedance state of the third circuit from the second impedance state of the third circuit additional information of the guiding (displacement) direction can be obtained. A larger part of the magnetic field that is measured at the second circuit consists of the strength of the second magnetic when the third circuit generates a larger second magnetic field (first impedance state). The difference between the magnetic field strength that is measured in the first impedance state and the second impedance state relates to the generated second magnetic field. Polarity information can be obtained when the processing unit knows the active impedance state.

The impedance state of the third circuit can for example be communicated to the processing unit by means of a real-time communication channel or it can for example be derived from the measured signal. Additional information can be added to help distinguishing the impedance states of the third circuit. For instance, the time in which the first impedance state is active can be longer or shorter than the time in which the second impedance state is active and/or the frequency with which the impedance state is switched can be varied over time (chirping). The parameters of this additional information (e.g., duty cycle, frequency, duration, chirp settings) can be static on system level and/or be communicated from the transponder unit to the processing unit via a communication channel.

The frequency at which the impedance states of the third circuit are switched or toggled should preferably be sufficiently high to have a limited influence of changes of the environment, such as a moving vehicle, e.g., during parking (<2m/s) and/or during the movement of a first energy transfer unit (e.g. comprising a plug) to a second energy transfer unit (e.g. comprising a socket) (<300mm/s) and/or the vehicle suspension frequency (<5Hz). Hence, advantageously the impedance switching frequency of the transponder circuit is at least 20Hz, advantageously at least 50Hz.

It can be beneficial to have a defined relation between the phase and frequency of the emitted first magnetic field and the measured second magnetic field. This can be achieved by using analog or digital hardware components or in the processing unit. The emitted magnetic field can for example be mixed and demixed by a shared signal and/or the magnetic fields can be generated and measured by using a shared clock signal for a digital-to-analog converter and an analog-to-digital converter. This allows to reduce phase noise and/or to eliminate frequency offset.

It can be beneficial to adapt the coil topology to the environment in which the coils are integrated. Specifically, electrical conducting and magnetic permeable materials relatively close to coils generating a magnetic field, e.g. at a distance of 20 mm or less or typically between 1 mm and 10 mm, can negatively influence the magnetic field strength in a certain orientation, and hence, it can be beneficial to adapt the coils winding axes to minimize this interference.

Consider for example an ACDU system. One possible integration would be to place the transponder (third) coil in a unit underneath a vehicle. Typically the underbody of this vehicle includes a significant amount of electrical conducting and magnetic permeable materials surrounding the transponder coil. As a result, the magnetic field that is generated by the transponder coil will be influenced (e.g. the field intensity is decreased) by the magnetic material of the underbody. The guiding system can be optimized to take this interference into account by adapting an orientation of the winding axis/axes of the transponder coil(s). When the underbody of the vehicle comprises significant amounts of steel in proximity of the transponder coil, it can for example be beneficial to have a winding axis of the transponder coil that is perpendicular to the magnetic permeable steel underbody (z-axis). When the underbody comprises significant amounts of aluminum in proximity of the transponder coil, it can for example be beneficial to orient the winding axis of the transponder coil parallel to the underbody plane of the vehicle (x-axis and/or y-axis).

**Claims**

1. Guiding system (30), comprising:

a first circuit (31) comprising a first coil (310) coupled to a driving circuit configured to drive the first coil for emitting a first electromagnetic field (64), wherein the first coil has a first winding axis (312),
a second circuit (32) comprising a second coil (320) coupled to a detection circuit and configured to interact with a second electromagnetic field, wherein the second coil has a second winding axis (322) essentially orthogonal to the first winding axis, and
a third circuit (33) comprising a third coil (330) configured to generate the second electromagnetic field based on an interaction between the first electromagnetic field and the third coil, wherein the third coil has a third winding axis having a directional component parallel to one of the first winding axis and the second winding axis,
wherein the guiding system further comprises a processing unit (35) connected to the detection circuit and configured to detect a polarity of the second electromagnetic field received by the second coil and to determine a displacement direction between the third coil (330) and a first reference plane (60) based on the detected polarity of the second electromagnetic field, wherein the polarity changes sign across the first reference plane.

2. Guiding system according to claim 1, wherein the third winding axis has a directional component orthogonal to the first winding axis (312), and wherein the first reference plane (60) is defined by:

a plane orthogonal to the first winding axis (312), the first reference plane intersecting a location where the first electromagnetic field has a direction oriented orthogonal to the third winding axis, or
a plane orthogonal to the directional component, the first reference plane intersecting a location where the first electromagnetic field has a direction oriented orthogonal to the third winding axis.

3. Guiding system according to claim 1, wherein the third winding axis has a directional component orthogonal to the second winding axis (322), wherein the first reference plane is defined by:

a plane orthogonal to the second winding axis, the first reference plane intersecting a location where the second electromagnetic field has a direction oriented orthogonal to the second winding axis, or
a plane orthogonal to the directional component, the first reference plane intersecting a location where the second electromagnetic field has a direction oriented orthogonal to the second winding axis.

4. Guiding system according to any one of the preceding claims, wherein the processing unit (35) is further configured for guiding a movement between the third coil (330) and the first reference plane (60) based on the displacement direction.

5. Guiding system according to any one of the preceding claims, wherein the third circuit is configured for modulating an impedance of the third coil, preferably wherein the third circuit comprises a switching device (333) configured to interrupt a current path of the third coil (330), wherein the third circuit is configured to operate the switching device to modulate the impedance.

6. Guiding system according to any one of the previous claims, wherein the first circuit and the third circuit (33) each further comprise a respective capacitor (332), wherein the first coil and the third coil are each configured to form a resonant circuit with the respective capacitor.

7. Guiding system according to any one of the previous claims, wherein the processing unit (35) is further configured to detect a magnetic field strength.

8. Guiding system according to any one of the previous claims, wherein the first coil (310) defines a first center and the second coil (320) defines a second center, and wherein the first center and the second center coincide.

9. Guiding system according to any one of the previous claims, further comprising at least one further coil having a respective further winding axis, wherein the further coil is coupled to a further driving circuit configured to drive the further coil for emitting a third electromagnetic field, wherein the third circuit (33) is configured to generate a fourth electromagnetic field based on an interaction between the third electromagnetic field and the third coil (330), wherein the directional component of the third winding axis is orthogonal to the further winding axis such that a further reference plane is defined by:

a plane orthogonal to the further winding axis, the further reference plane intersecting a location where the third electromagnetic field has a direction oriented orthogonal to the third winding axis,
or
a plane orthogonal to the directional component, the further reference plane intersecting a location where the third electromagnetic field has a direction oriented orthogonal to the third winding axis,
wherein the processing unit (35) is configured to detect a polarity of the fourth electromagnetic field received by the second coil (320) and to determine a displacement direction between the third coil and the further reference plane based on the detected polarity of the fourth electromagnetic field, wherein the polarity of the fourth electromagnetic field changes sign across the further reference plane, preferably wherein the further winding axis is not parallel to the first winding axis, preferably is orthogonal to the first winding axis, preferably wherein the further coil defines a further coil center, wherein the further coil center is offset relative to a first coil center defined by the first coil or wherein the further coil center coincides with the first coil center.

10. Guiding system according to any one of the claims 1 to 8, further comprising at least one further coil (340) having a respective further winding axis, wherein the further coil is coupled to the detection circuit and configured to interact with the second electromagnetic field, wherein the directional component of the third winding axis is orthogonal to the further winding axis such that a further reference plane is defined by:

a plane orthogonal to the further winding axis, the further reference plane intersecting a location where the second electromagnetic field has a direction oriented orthogonal to the further winding axis,
or
a plane orthogonal to the directional component, the further reference plane intersecting a location where the second electromagnetic field has a direction oriented orthogonal to the further winding axis,
wherein the processing unit (35) is configured to detect a further polarity of the second electromagnetic field received by the further coil and to determine a displacement direction between the third coil and the further reference plane based on the detected further polarity, wherein the further polarity changes sign across the further reference plane, preferably wherein the further winding axis is not parallel to the second winding axis, preferably is orthogonal to the second winding axis, preferably wherein the further coil defines a further coil center, wherein the further coil center is offset relative to a second coil center defined by the second coil, or wherein the further coil center coincides with the second coil center.

11. Guiding system according to any one of the preceding claims, further comprising an actuator, wherein the processing unit is configured to drive the actuator to perform a displacement between the third coil (330) and the first reference plane (60), optionally between the third coil and the further reference plane, preferably wherein the displacement comprises a translation along the displacement direction, preferably wherein the processing unit (35) is configured to drive the actuator to align the third coil (330) and the first reference plane (60) based on the detected polarity and on a field strength of the second electromagnetic field.

12. Manipulator assembly, comprising a manipulator (12) and a target (21), wherein the manipulator assembly comprises the guiding system according to any one of the preceding claims, preferably wherein the target (21) comprises the third coil (330), and wherein the processing unit (35) is configured to guide the manipulator and/or the target into alignment with each other.

13. Method for guiding, the method comprising the steps of:

generating a first electromagnetic field by a first coil (310) having a first winding axis (312), detecting a polarity of a second electromagnetic field received by a second coil (320) having a second winding axis (322) essentially orthogonal to the first winding axis, wherein the second electromagnetic field is generated by a third coil (330) and based on an interaction between the first electromagnetic field and the third coil, wherein the third coil has a third winding axis having a directional component parallel to one of the first winding axis and the second winding axis, determining a displacement direction between the third coil and a first reference plane (60) based on the detected polarity of the second electromagnetic field, wherein the polarity changes sign across the first reference plane, preferably comprising guiding a movement between the third coil (330) and the first reference plane (60) based on the displacement direction, preferably comprising moving the third coil and/or the first reference plane into alignment with one another, preferably further comprising modulating an impedance of the third coil to obtain a modulated second electromagnetic field and compensating for environmental interference based on the modulated second electromagnetic field, optionally wherein modulating the impedance comprises intermittently interrupting a current path of the third coil, preferably further comprising detecting an electromagnetic field strength of the second electromagnetic field and determining the displacement direction between the third coil and the first reference plane based on the detected polarity and the detected electromagnetic field strength.

14. Method according to claim 13, further comprising generating a third electromagnetic field by a further coil (340) having a further winding axis essentially orthogonal to the second winding axis, wherein the third electromagnetic field interacts with the third coil to generate a fourth electromagnetic field, detecting a polarity of the fourth electromagnetic field received by the second coil, and determining a displacement direction between the third coil and a further reference plane based on the detected polarity of the fourth electromagnetic field, wherein the polarity of the fourth electromagnetic field changes sign across the further reference plane.

15. Method according to claim 13, further comprising detecting a further polarity of the second electromagnetic field received by a further coil (340) having a winding axis essentially orthogonal to the first winding axis, and determining a displacement direction between the third coil and a further reference plane based on the detected further polarity, wherein the further polarity of the second electromagnetic field changes sign across the further reference plane.

**Patentansprüche**

1. Führungssystem (30), umfassend:

   eine erste Schaltung (31), umfassend eine erste Spule (310), die mit einer Antriebsschaltung gekoppelt ist, die dazu konfiguriert ist, die erste Spule zum Emittieren eines ersten elektromagnetischen Feldes (64) anzutreiben, wobei die erste Spule eine erste Windungsachse (312) aufweist,
   eine zweite Schaltung (32), umfassend eine zweite Spule (320), die mit einer Erfassungsschaltung gekoppelt und dazu konfiguriert ist, mit einem zweiten elektromagnetischen Feld zu interagieren, wobei die zweite Spule eine zweite Windungsachse (322) aufweist, die im Wesentlichen orthogonal zu der ersten Windungsachse ist, und
   eine dritte Schaltung (33), umfassend eine dritte Spule (330), die dazu konfiguriert ist, das zweite elektromagnetische Feld auf Basis einer Interaktion zwischen dem ersten elektromagnetischen Feld und der dritten Spule zu erzeugen, wobei die dritte Spule eine dritte Windungsachse aufweist, die eine Richtungskomponente aufweist, die zu einer aus der ersten Windungsachse und der zweiten Windungsachse parallel ist, wobei das Führungssystem ferner eine Verarbeitungseinheit (35) aufweist, die mit der Erfassungsschaltung verbunden und dazu konfiguriert ist, eine Polarität des zweiten elektromagnetischen Feldes, die von der zweiten Spule aufgenommen wird, zu erfassen und eine Verschiebungsrichtung zwischen der dritten Spule (330) und einer ersten Referenzebene (60) auf Basis der erfassten Polarität des zweiten elektromagnetischen Feldes zu bestimmen, wobei die Polarität über die erste Referenzebene hinweg ihr Vorzeichen ändert.

2. Führungssystem nach Anspruch 1, wobei die dritte Windungsachse eine Richtungskomponente aufweist, die orthogonal zu der ersten Windungsachse (312) ist, und wobei die erste Referenzebene (60) durch Folgendes definiert ist:

   eine Ebene, die orthogonal zu der ersten Windungsachse (312) ist, wobei die erste Referenzebene eine Stelle schneidet, wo das erste elektromagnetische Feld eine Richtung aufweist, die orthogonal zu der dritten Windungsachse orientiert ist,
   oder
   eine Ebene, die orthogonal zu der Richtungskomponente ist, wobei die erste Referenzebene eine Stelle schneidet, wo das erste elektromagnetische Feld eine Richtung aufweist, die orthogonal zu der dritten Windungsachse orientiert ist.

3. Führungssystem nach Anspruch 1, wobei die dritte Windungsachse eine Richtungskomponente aufweist, die orthogonal zu der zweiten Windungsachse (322) ist, wobei die erste Referenzebene durch Folgendes definiert ist:

   eine Ebene, die orthogonal zu der zweiten Windungsachse ist, wobei die erste Referenzebene eine Stelle schneidet, wo das zweite elektromagnetische Feld eine Richtung aufweist, die orthogonal zu der zweiten Windungsachse orientiert ist,
   oder
   eine Ebene, die orthogonal zu der Richtungskomponente ist, wobei die erste Referenzebene eine Stelle schneidet, wo das zweite elektromagnetische Feld eine Richtung aufweist, die orthogonal zu der zweiten Windungsachse orientiert ist.

4. Führungssystem nach einem der vorhergehenden Ansprüche, wobei die Verarbeitungseinheit (35) ferner zum Führen einer Bewegung zwischen der dritten Spule (330) und der ersten Referenzebene (60) auf Basis der Verschiebungsrichtung konfiguriert ist.

5. Führungssystem nach einem der vorhergehenden Ansprüche, wobei die dritte Schaltung zum Modulieren einer Impedanz der dritten Spule konfiguriert ist, vorzugsweise wobei die dritte Schaltung eine Schaltvorrichtung (333) umfasst, die dazu konfiguriert ist, einen Strompfad der dritten Spule (330) zu unterbrechen, wobei die dritte Schaltung dazu konfiguriert ist, die Schaltvorrichtung zu betreiben, um die Impedanz zu modulieren.

6. Führungssystem nach einem der vorhergehenden Ansprüche, wobei die erste Schaltung und die dritte Schaltung (33) jeweils ferner einen jeweiligen Kondensator (332) umfassen, wobei die erste Spule und die dritte Spule jeweils dazu konfiguriert sind, eine resonante Schaltung mit dem jeweiligen Kondensator auszubilden.

7. Führungssystem nach einem der vorhergehenden Ansprüche, wobei die Verarbeitungseinheit (35) ferner zum Erfassen eine magnetische Feldstärke konfiguriert ist.

8. Führungssystem nach einem der vorhergehenden Ansprüche, wobei die erste Spule (310) eine erste Mitte definiert und die zweite Spule (320) eine zweite Mitte definiert, und wobei die erste Mitte und die zweite Mitte zusammenfallen.

9. Führungssystem nach einem der vorhergehenden Ansprüche, ferner umfassend mindestens eine weitere Spule, die eine jeweilige weitere Windungsachse aufweist, wobei die weitere Spule mit einer weiteren Antriebsschaltung gekoppelt ist, die dazu konfiguriert ist, die weitere Spule zum Emittieren eines dritten elektromagnetischen Feldes anzutreiben, wobei die dritte Schaltung (33) dazu konfiguriert ist, ein viertes elektromagnetisches Feld auf Basis einer Interaktion zwischen dem dritten elektromagnetischen Feld und der dritten Spule (330) zu erzeugen, wobei die Richtungskomponente der dritten Windungsachse orthogonal zu der weiteren Windungsachse ist, sodass eine weitere Referenzebene durch Folgendes definiert ist:

   eine Ebene, die orthogonal zu der weiteren Windungsachse ist, wobei die weitere Referenzebene eine Stelle schneidet, wo das dritte elektromagnetische Feld eine Richtung aufweist, die orthogonal zu der dritten Windungsachse orientiert ist,
   oder
   eine Ebene, die orthogonal zu der Richtungskomponente ist, wobei die weitere Referenzebene eine Stelle schneidet, wo das dritte elektromagnetische Feld eine Richtung aufweist, die orthogonal zu der dritten Windungsachse orientiert ist,
   wobei die Verarbeitungseinheit (35) dazu konfiguriert ist, eine Polarität des von der zweiten Spule (320) aufgenommenen vierten elektromagnetischen Feldes zu erfassen, und um eine Verschiebungsrichtung zwischen der dritten Spule und der weiteren Referenzebene auf Basis der erfassten Polarität des vierten elektromagnetischen Feldes zu bestimmen, wobei die Polarität des vierten elektromagnetischen Feldes über die weitere Referenzebene hinweg ihr Vorzeichen ändert, vorzugsweise wobei die weitere Windungsachse nicht parallel zu der ersten Windungsachse ist, vorzugsweise orthogonal zu der ersten Windungsachse ist, vorzugsweise wobei die weitere Spule eine weitere Spulenmitte definiert, wobei die weitere Spulenmitte relativ zu einer von der ersten Spule definierten ersten Spulenmitte versetzt ist, oder wobei die weitere Spulenmitte mit der ersten Spulenmitte zusammenfällt.

10. Führungssystem nach einem der Ansprüche 1 bis 8, ferner umfassend mindestens eine weitere Spule (340), die eine jeweilige weitere Windungsachse aufweist, wobei die weitere Spule mit der Erfassungsschaltung gekoppelt und dazu konfiguriert ist, mit dem zweiten elektromagnetischen Feld zu interagieren, wobei die Richtungskomponente der dritten Windungsachse orthogonal zu der weiteren Windungsachse ist, sodass eine weitere Referenzebene durch Folgendes definiert ist:

eine Ebene, die orthogonal zu der weiteren Windungsachse ist, wobei die weitere Referenzebene eine Stelle schneidet, wo das zweite elektromagnetische Feld eine Richtung aufweist, die orthogonal zu der weiteren Windungsachse orientiert ist, oder

eine Ebene, die orthogonal zu der Richtungskomponente ist, wobei die weitere Referenzebene eine Stelle schneidet, wo das zweite elektromagnetische Feld eine Richtung aufweist, die orthogonal zu der weiteren Windungsachse orientiert ist, wobei die Verarbeitungseinheit (35) dazu konfiguriert ist, eine weitere Polarität des von der weiteren Spule aufgenommenen zweiten elektromagnetischen Feldes zu erfassen und um eine Verschiebungsrichtung zwischen der dritten Spule und der weiteren Referenzebene auf Basis der erfassten weiteren Polarität zu bestimmen, wobei die weitere Polarität über die weitere Referenzebene hinweg ihr Vorzeichen ändert, vorzugsweise wobei die weitere Windungsachse nicht parallel zu der zweiten Windungsachse ist, vorzugsweise orthogonal zu der zweiten Windungsachse ist, vorzugsweise wobei die weitere Spule eine weitere Spulenmitte definiert, wobei die weitere Spulenmitte relativ zu einer von der zweiten Spule definierten zweiten Spulenmitte versetzt ist, oder wobei die weitere Spulenmitte mit der zweiten Spulenmitte zusammenfällt.

11. Führungssystem nach einem der vorhergehenden Ansprüche, ferner umfassend einen Aktuator, wobei die Verarbeitungseinheit dazu konfiguriert ist, den Aktuator anzutreiben, um eine Verschiebung zwischen der dritten Spule (330) und der ersten Referenzebene (60), optional zwischen der dritten Spule und der weiteren Referenzebene durchzuführen, vorzugsweise wobei die Verschiebung eine Translation entlang der Verschiebungsrichtung umfasst, vorzugsweise wobei die Verarbeitungseinheit (35) dazu konfiguriert ist, den Aktuator dazu anzutreiben, die dritte Spule (330) und die erste Referenzebene (60) auf Basis der erfassten Polarität und einer Feldstärke des zweiten elektromagnetischen Feldes auszurichten.

12. Manipulatoranordnung, umfassend einen Manipulator (12) und ein Ziel (21), wobei die Manipulatoranordnung das Führungssystem nach einem der vorhergehenden Ansprüche umfasst, vorzugsweise wobei das Ziel (21) die dritte Spule (330) umfasst, und wobei die Verarbeitungseinheit (35) dazu konfiguriert ist, den Manipulator und/oder das Ziel in eine Ausrichtung zueinander zu führen.

13. Verfahren zum Führen, das Verfahren umfassend die folgenden Schritte:

Erzeugen eines ersten elektromagnetischen Feldes durch eine erste Spule (310), die eine erste Windungsachse (312) aufweist, Erfassen einer Polarität eines zweiten elektromagnetischen Feldes, die von einer zweiten Spule (320) aufgenommen wird, die eine zweite Windungsachse (322) aufweist, die im Wesentlichen orthogonal zu der ersten Windungsachse ist,

wobei das zweite elektromagnetische Feld durch eine dritte Spule (330) und auf Basis einer Interaktion zwischen dem ersten elektromagnetischen Feld und der dritten Spule erzeugt wird, wobei die dritte Spule eine dritte Windungsachse aufweist, die eine Richtungskomponente aufweist, die zu einer aus der ersten Windungsachse und der zweiten Windungsachse parallel ist, Bestimmen einer Verschiebungsrichtung zwischen der dritten Spule und einer ersten Referenzebene (60) auf Basis der erfassten Polarität des zweiten elektromagnetischen Feldes, wobei die Polarität über die erste Referenzebene hinweg ihr Vorzeichen ändert,

vorzugsweise umfassend das Führen einer Bewegung zwischen der dritten Spule (330) und der ersten Referenzebene (60) auf Basis der Verschiebungsrichtung, vorzugsweise umfassend das Bewegen der dritten Spule und/oder der ersten Referenzebene in eine Ausrichtung zueinander, vorzugsweise ferner umfassend das Modulieren einer Impedanz der dritten Spule, um ein moduliertes zweites elektromagnetisches Feld zu erhalten, und Kompensieren einer Umgebungsinterferenz auf Basis des modulierten zweiten elektromagnetischen Feldes, wobei optional das Modulieren der Impedanz das zwischenzeitliche Unterbrechen eines Strompfades der dritten Spule umfasst, vorzugsweise ferner umfassend Erfassen einer elektromagnetischen Feldstärke des zweiten elektromagnetischen Feldes und Bestimmen der Verschiebungsrichtung zwischen der dritten Spule und der ersten Referenzebene auf Basis der erfassten Polarität und der erfassten elektromagnetischen Feldstärke.

14. Verfahren nach Anspruch 13, ferner umfassend Erzeugen eines dritten elektromagnetischen Feldes durch eine weitere Spule (340), die eine weitere Windungsachse aufweist, die im Wesentlichen orthogonal zu der zweiten Windungsachse ist, wobei das dritte elektromagnetische Feld mit der dritten Spule interagiert, um ein viertes elektromagnetisches Feld zu erzeugen, Erfassen einer Polarität des von der zweiten Spule aufgenommenen vierten elektromagnetischen Feldes, und Bestimmen einer Verschiebungsrichtung zwischen der dritten Spule und einer weiteren Referenzebene auf Basis der erfassten Polarität des vierten elektromagnetischen Feldes, wobei die Polarität des vierten elektromagnetischen Feldes über die weitere Referenzebene hinweg ihr Vorzeichen ändert.

15. Verfahren nach Anspruch 13, ferner umfassend Erfassen einer weiteren Polarität des zweiten elektromagnetischen Feldes, die von einer weiteren Spule (340) aufgenommen wird, die eine Windungsachse aufweist, die im Wesentlichen orthogonal zu der ersten Windungsachse ist, und Bestimmen einer Verschiebungsrichtung zwischen der dritten Spule und einer weiteren Referenzebene auf Basis der erfassten weiteren Polarität, wobei die weitere Polarität des zweiten elektromagnetischen Feldes über die weitere Referenzebene hinweg ihr Vorzeichen ändert.

## Revendications

1. Système de guidage (30), comprenant :

   un premier circuit (31) comprenant une première bobine (310) couplée à un circuit d'entraînement configuré pour entraîner la première bobine pour émettre un premier champ électromagnétique (64), dans lequel la première bobine présente un premier axe d'enroulement (312),

   un deuxième circuit (32) comprenant une deuxième bobine (320) couplée à un circuit de détection et configurée pour interagir avec un deuxième champ électromagnétique, dans lequel la deuxième bobine présente un deuxième axe d'enroulement (322) essentiellement orthogonal au premier axe d'enroulement, et

   un troisième circuit (33) comprenant une troisième bobine (330) configurée pour générer le deuxième champ électromagnétique sur la base d'une interaction entre le premier champ électromagnétique et la troisième bobine, dans lequel la troisième bobine présente un troisième axe d'enroulement présentant une composante directionnelle parallèle à l'un du premier axe d'enroulement et du deuxième axe d'enroulement,

   dans lequel le système de guidage comprend en outre une unité de traitement (35) connectée au circuit de détection et configurée pour détecter une polarité du deuxième champ électromagnétique reçu par la deuxième bobine et pour déterminer une direction de déplacement entre la troisième bobine (330) et un premier plan de référence (60) sur la base de la polarité détectée du deuxième champ électromagnétique, dans lequel la polarité change de signe sur le premier plan de référence.

2. Système de guidage selon la revendication 1, dans lequel le troisième axe d'enroulement présente une composante directionnelle orthogonale au premier axe d'enroulement (312), et dans lequel le premier plan de référence (60) est défini par :

   un plan orthogonal au premier axe d'enroulement (312), le premier plan de référence croisant un emplacement où le premier champ électromagnétique présente une direction orientée de manière orthogonale au troisième axe d'enroulement,
   ou
   un plan orthogonal à la composante directionnelle, le premier plan de référence croisant un emplacement où le premier champ électromagnétique présente une direction orientée de manière orthogonale au troisième axe d'enroulement.

3. Système de guidage selon la revendication 1, dans lequel le troisième axe d'enroulement présente une composante directionnelle orthogonale au deuxième axe d'enroulement (322), dans lequel le premier plan de référence est défini par :

   un plan orthogonal au deuxième axe d'enroulement, le premier plan de référence croisant un emplacement où le deuxième champ électromagnétique présente une direction orientée de manière orthogonale au deuxième axe d'enroulement,
   ou
   un plan orthogonal à la composante directionnelle, le premier plan de référence croisant un emplacement où le deuxième champ électromagnétique présente une direction orientée de manière orthogonale au deuxième axe d'enroulement.

4. Système de guidage selon l'une quelconque des revendications précédentes, dans lequel l'unité de traitement (35) est en outre configurée pour guider un déplacement entre la troisième bobine (330) et le premier plan de référence (60) sur la base de la direction de déplacement.

5. Système de guidage selon l'une quelconque des revendications précédentes, dans lequel le troisième circuit est configuré pour moduler une impédance de la troisième bobine, de préférence dans lequel le troisième circuit comprend un dispositif de commutation (333) configuré pour interrompre une trajectoire de courant de la troisième bobine (330), dans lequel le troisième circuit est configuré pour actionner le dispositif de commutation pour moduler l'impédance.

6. Système de guidage selon l'une quelconque des revendications précédentes, dans lequel le premier circuit et le troisième circuit (33) comprennent chacun en outre un condensateur (332) respectif, dans lequel la première bobine et la troisième bobine sont chacune configurées pour former un circuit résonant avec le condensateur respectif.

7. Système de guidage selon l'une quelconque des revendications précédentes, dans lequel l'unité de traitement (35) est en outre configurée pour détecter une force de champ magnétique.

8. Système de guidage selon l'une quelconque des revendications précédentes, dans lequel la première bobine (310) définit un premier centre et la deuxième bobine (320) définit un deuxième centre, et dans lequel le premier centre et le deuxième centre coïncident.

9. Système de guidage selon l'une quelconque des revendications précédentes, comprenant en outre au moins une autre bobine présentant un autre axe d'enroulement respectif, dans lequel l'autre bobine est couplée à un autre circuit d'entraînement configuré pour entraîner l'autre bobine pour émettre un troisième champ électromagnétique, dans lequel le troisième circuit (33) est configuré pour générer un quatrième champ électromagnétique sur la base d'une interaction entre le troisième champ électromagnétique et la troisième bobine (330), dans lequel la composante directionnelle du troisième axe d'enroulement est orthogonale à l'autre axe d'enroulement de telle sorte qu'un autre plan de référence est défini par :

   un plan orthogonal à l'autre axe d'enroulement, l'autre plan de référence croisant un emplacement où le troisième champ électromagnétique présente une direction orientée de manière orthogonale au troisième axe d'enroulement, ou
   un plan orthogonal à la composante directionnelle, l'autre plan de référence croisant un emplacement où le troisième champ électromagnétique présente une direction orientée de manière orthogonale au troisième axe d'enroulement,
   dans lequel l'unité de traitement (35) est configurée pour détecter une polarité du quatrième champ électromagnétique reçu par la deuxième bobine (320) et pour déterminer une direction de déplacement entre la troisième bobine et l'autre plan de référence sur la base de la polarité détectée du quatrième champ électromagnétique, dans lequel la polarité du quatrième champ électromagnétique change de signe sur l'autre plan de référence, de préférence dans lequel l'autre axe d'enroulement n'est pas parallèle au premier axe d'enroulement, de préférence est orthogonal au premier axe d'enroulement, de préférence dans lequel l'autre bobine définit un autre centre de bobine, dans lequel l'autre centre de bobine est décalé par rapport à un premier centre de bobine défini par la première bobine ou dans lequel l'autre centre de bobine coïncide avec le premier centre de bobine.

10. Système de guidage selon l'une quelconque des revendications 1 à 8, comprenant en outre au moins une autre bobine (340) présentant un autre axe d'enroulement respectif, dans lequel l'autre bobine est couplée au circuit de détection et configurée pour interagir avec le deuxième champ électromagnétique, dans lequel la composante directionnelle du troisième axe d'enroulement est orthogonale à l'autre axe d'enroulement de telle sorte qu'un autre plan de référence est défini par :

   un plan orthogonal à l'autre axe d'enroulement, l'autre plan de référence croisant un emplacement où le deuxième champ électromagnétique présente une direction orientée de manière orthogonale à l'autre axe d'enroulement, ou
   un plan orthogonal à la composante directionnelle, l'autre plan de référence croisant un emplacement où le deuxième champ électromagnétique présente une direction orientée de manière orthogonale à l'autre axe d'enroulement,
   dans lequel l'unité de traitement (35) est configurée pour détecter une autre polarité du deuxième champ électromagnétique reçu par l'autre bobine et pour déterminer une direction de déplacement entre la troisième bobine et l'autre plan de référence sur la base de l'autre polarité détectée, dans lequel l'autre polarité change de signe sur l'autre plan de référence, de préférence dans lequel l'autre axe d'enroulement n'est pas parallèle au deuxième axe d'enroulement, de préférence est orthogonal au deuxième axe d'enroulement, de préférence dans lequel l'autre bobine définit un autre centre de bobine, dans lequel l'autre centre de bobine est décalé par rapport à un deuxième centre de bobine défini par la deuxième bobine, ou dans lequel l'autre centre de bobine coïncide avec le deuxième centre de bobine.

11. Système de guidage selon l'une quelconque des revendications précédentes, comprenant en outre un actionneur, dans lequel l'unité de traitement est configurée pour entraîner l'actionneur pour effectuer un déplacement entre la troisième bobine (330) et le premier plan de référence (60), facultativement entre la troisième bobine et l'autre plan de référence, de préférence dans lequel le déplacement comprend une translation le long de la direction de déplacement, de préférence dans lequel l'unité de traitement (35) est configurée pour entraîner l'actionneur pour aligner la troisième bobine (330) et le premier plan de référence (60) sur la base de la polarité détectée et d'une force de champ du deuxième champ électromagnétique.

12. Ensemble manipulateur, comprenant un manipulateur (12) et une cible (21), dans lequel l'ensemble manipulateur comprend le système de guidage selon l'une quelconque des revendications précédentes, de préférence dans lequel la cible (21) comprend la troisième bobine (330), et dans lequel l'unité de traitement (35) est configurée pour guider le manipulateur et/ou la cible en alignement l'un avec l'autre.

13. Procédé de guidage, le procédé comprenant les étapes de :

génération d'un premier champ électromagnétique par une première bobine (310) présentant un premier axe d'enroulement (312),
détection d'une polarité d'un deuxième champ électromagnétique reçu par une deuxième bobine (320) présentant un deuxième axe d'enroulement (322) essentiellement orthogonal au premier axe d'enroulement,
dans lequel le deuxième champ électromagnétique est généré par une troisième bobine (330) et basé sur une interaction entre le premier champ électromagnétique et la troisième bobine, dans lequel la troisième bobine présente un troisième axe d'enroulement présentant une composante directionnelle parallèle à l'un du premier axe d'enroulement et du deuxième axe d'enroulement,
détermination d'une direction de déplacement entre la troisième bobine et un premier plan de référence (60) sur la base de la polarité détectée du deuxième champ électromagnétique, dans lequel la polarité change de signe sur le premier plan de référence,
de préférence comprenant le guidage d'un déplacement entre la troisième bobine (330) et le premier plan de référence (60) sur la base de la direction de déplacement, de préférence comprenant le déplacement de la troisième bobine et/ou du premier plan de référence en alignement l'un avec l'autre, de préférence comprenant en outre la modulation d'une impédance de la troisième bobine pour obtenir un deuxième champ électromagnétique modulé et la compensation de l'interférence environnementale sur la base du deuxième champ électromagnétique modulé, facultativement dans lequel la modulation de l'impédance comprend l'interruption intermittente d'une trajectoire de courant de la troisième bobine, de préférence comprenant en outre la détection d'une force de champ électromagnétique du deuxième champ électromagnétique et la détermination de la direction de déplacement entre la troisième bobine et le premier plan de référence sur la base de la polarité détectée et de la force de champ électromagnétique détectée.

14. Procédé selon la revendication 13, comprenant en outre la génération d'un troisième champ électromagnétique par une autre bobine (340) présentant un autre axe d'enroulement essentiellement orthogonal au deuxième axe d'enroulement, dans lequel le troisième champ électromagnétique interagit avec la troisième bobine pour générer un quatrième champ électromagnétique, la détection d'une polarité du quatrième champ électromagnétique reçu par la deuxième bobine, et la détermination d'une direction de déplacement entre la troisième bobine et un autre plan de référence sur la base de la polarité détectée du quatrième champ électromagnétique, dans lequel la polarité du quatrième champ électromagnétique change de signe sur l'autre plan de référence.

15. Procédé selon la revendication 13, comprenant en outre la détection d'une autre polarité du deuxième champ électromagnétique reçu par une autre bobine (340) présentant un axe d'enroulement essentiellement orthogonal au premier axe d'enroulement, et la détermination d'une direction de déplacement entre la troisième bobine et un autre plan de référence sur la base de l'autre polarité détectée, dans lequel l'autre polarité du deuxième champ électromagnétique change de signe sur l'autre plan de référence.

FIG 1

FIG 2

FIG 3A

FIG 3B

$\mathrm{T}_2$ ■ ┈┈┈┈┈ ➤

$\vec{e}_z$

$\vec{e}_y$ ●→ $\vec{e}_x$

$\mathrm{T}_1$ ■

## FIG 4A

45

41

distance in x (m)

## FIG 4B

FIG 4C

FIG 4D

FIG 5

FIG 6A

FIG 6B

FIG 6C

**Receiver signal with $z_{offset,transponder}$ = 0.1 m**

FIG 7A

**Receiver signal with $x_{offset,transponder}$ = 0.1 m**

FIG 7B

**Receiver signal with z$_{offset,transponder}$ = 0.1 m**

FIG 8A

**Receiver signal with x$_{offset,transponder}$ = 0.1 m**

FIG 8B

Receiver signal with $z_{offset,transponder} = 0.1$ m

FIG 8C

Receiver signal with $x_{offset,transponder} = 0.1$ m

FIG 8D

FIG 9A

FIG 9B

33

330

331

**FIG 10**

33

330

332

333

331

**FIG 11**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20170259679 A
- US 20180056800 A
- WO 2018077514 A
- US 6838989 B